# EUROPEAN PATENT SPECIFICATION

(11) **EP 4 260 434 B1**
(45) Date of publication and mention of the grant of the patent: **16.04.2025**
(21) Application number: 20824918.5
(22) Date of filing: 10.12.2020
(51) Int. Cl.: H02K 1/18, H02K 15/02, H02K 15/12, H02K 1/14, H02K 15/14, H02K 5/128, H02K 11/33

(54) **AUTOMOTIVE ELECTRIC AUXILIARY UNIT AND METHOD FOR MANUFACTURING THE SAME**
ELEKTRISCHE HILFSEINHEIT FÜR EIN KRAFTFAHRZEUG UND VERFAHREN ZU IHRER HERSTELLUNG
UNITÉ ÉLECTRIQUE AUXILIAIRE D'AUTOMOBILE ET SON PROCÉDÉ DE FABRICATION

(43) Date of publication of application: 18.10.2023
(73) Proprietor: Pierburg Pump Technology GmbH, 41460 Neuss (DE)
(72) Inventor: FINDEISEN, Alexander, 41460 Neuss (DE)
(74) Representative: terpatent PartGmbB
(86) International application number: PCT/EP2020/085504
(87) International publication number: WO 2022/122157

(56) References cited:
- EP-A1- 2 811 168
- US-A1- 2004 108 779
- US-A1- 2016 322 880
- US-A1- 2020 036 252
- US-A1- 2020 191 151
- US-B2- 10 574 098

## Description

The invention is directed to an automotive electric auxiliary unit.

Automotive electric auxiliary units are not provided as traction engines, but are secondary devices such as, for example, vacuum pumps, liquid pumps or gas pumps. Typically, the automotive electric auxiliary unit is provided with an electric motor. Such an electric motor of an automotive electric auxiliary unit is, for example, disclosed in EP 1 306 960 A2 and in US 2020/036252 A1. The electric motor comprises a rotatable motor rotor and a static motor stator. The motor stator comprises a main stator body which is provided with several stator teeth, wherein several stator coils are wound onto the stator teeth. To facilitate the production of the motor stator, it is known to configure the stator teeth separately, wind them separately first and subsequently assemble them to form a closed stator. Alternatively, the stator may comprise a main stator body with several stator teeth, wherein the motor stator teeth are radially inside connected with the respectively adjacent stator teeth. The stator teeth may be wound from radially outside. After the stator coils have been wound, a separate ring-shaped magnetic back iron ring is set upon, so that the stator teeth comprise a magnetic connection radially outside.

Typically, the complete motor stator is fixed in a motor housing by screw joints or by an adhesive bonding. However, these fixation methods require additional fixation elements and/or a complex mounting process to attach the motor stator to the motor housing.

JP 6029597 B2 discloses a stator which is overmoulded with plastic.

US 2016/322880 A1 discloses a stator with a metal inner ring, a metal outer ring and a plastic damping layer arranged between the metal inner ring and the metal outer ring.

It is an object of the invention to provide an automotive electric auxiliary unit which can be fastened in a reliable and simple way.

This object is achieved with an automotive electric auxiliary unit with the features of claim 1.

The auxiliary unit according to the invention is provided with an electric motor with a motor stator and a motor rotor. The motor stator is provided with a stator sheet pack of packed stator sheets and one or more motor stator coils generating an electromagnetic field interacting with a rotatable motor rotor. A rotor assembly is provided with a rotatable rotor body and a permanent magnet attached to the rotor body. The motor rotor directly or indirectly drives a mechanical element. The mechanical element is for example a pump rotor being fixed co-rotatingly at the rotor body. The rotor assembly is rotating around an axial rotor axis.

The stator comprises several stator teeth which are connected radially inside with the respectively adjacent stator teeth. Radially outside, the stator teeth are connected with each other by a separate ring-shaped magnetic back iron ring. When the ring-shaped magnetic back iron ring is detached, the stator teeth are accessible so that all the stator teeth can be wound.

The automotive electric auxiliary comprises further a motor housing which is made of plastic. The motor rotor and the motor stator are arranged inside the plastic motor housing. The motor rotor is rotatably attached to the motor housing via bearing elements. The motor stator is attached to the housing.

To simplify the production of the auxiliary unit, the separate ring-shaped magnetic back iron ring is overmolded by the plastic motor housing.

The overmolding of the magnetic back iron ring causes a form-fit connection between the magnetic back iron ring and the housing. During the production of the motor housing and the overmolding of the magnetic back iron ring, a circumferential groove is created on an inner surface of the motor housing. The outer circumferential surface of the magnetic back iron ring is in contact with a bottom of the groove, so that the magnetic back iron ring is radially fixed at the motor housing. Furthermore, each axial end of the magnetic back iron ring is in contact with one flank of the groove, so that the magnetic back iron ring is form-fitted to the housing also in axial direction. In Addition, the motor stator is form-fitted and/or materially bonded to the housing in rotation direction.

The first step in the manufacture of the electric motor is to wind the coils onto the stator teeth and to produce the housing. During the plastic housing production step, the magnetic back iron ring is overmolded by the plastic material of the plastic housing and thus fixed to the plastic housing. Then the stator teeth with the wound coils are inserted into the magnetic back iron ring and fixed to the magnetic back iron ring. Finally, the motor rotor is inserted into the stator.

This kind of manufacturing of the electric motor reduces the production effort, wherein the additional step in which the electric motor is attached to the housing is not necessary anymore. Furthermore, it provides a reliable attachment of the motor stator to the housing.

In a preferred embodiment of the invention, the plastic motor housing is produced by injection moulding. The injection molding is a well-known process for manufacturing plastic components, wherein a thermoplastic material is liquefied and injected into an injection mold under pressure. Inside the mould, the material returns to its solid state through cooling or a cross-linking reaction and is removed as a finished part after opening the mould. The overmoulding of an element is achieved by inserting the element into the injection mould, whereby the liquefied plastic flows around the element and forms a form-fit connection to the element in the cooled state.

Preferably, the stator teeth are attached to the separate ring-shaped magnetic back iron ring by a form-fit and/or by a force-fit connection. Both types of connection allow a reliable connection of the stator teeth to the ring-shaped magnetic back iron ring in a simple and cost-effective way.

In a preferred embodiment of the invention, the form-fit connection is a dovetail connection, wherein several dovetail-like protrusions are press-fitted into corresponding grooves, so that the stator teeth are form-fitted to the magnetic back iron ring in the radial and tangential direction and force-fitted or friction-fitted to the magnetic back iron ring in the axial direction. The dovetail-like protrusions and the corresponding groves ensure a reliable fastening of the stator teeth at the magnetic back iron ring in radial direction.

During the manufacture of the electric motor, the ring is overmoulded through the motor housing and then the stator teeth are inserted axially into the magnetic back iron ring, whereby the dovetail-like protrusions are pushed axially into the grooves. The motor stator is therefore fixed to the housing only by injection overmoulding of the ring and the axially inserting the stator teeth into the ring. This reduces the mounting effort of the stator on the motor housing.

In a preferred embodiment of the invention, the stator teeth are attached to each other by a plastic member. The plastic member is ring-shaped and connects the stator teeth on the radially inner side so that the stator teeth protrude radially outwards. The plastic member separates the stator teeth electrically from each other. The ring-shaped plastic member can be made as a separate part, wherein the separate stator teeth are form-fitted to the ring-shaped plastic part. Alternatively, the stator teeth can be overmoulded by the plastic part.

The fact that the stator teeth are attached together by the plastic member to a mounting unit simplifies the mounting of the stator teeth at the ring-shaped magnetic back iron ring, wherein all stator teeth can be attached to the magnetic back iron ring in only one step.

In a preferred embodiment of the invention, the auxiliary unit is provided with a centrifugal pump rotor co-rotatably fixed to the motor rotor. Preferably the auxiliary unit is an electric coolant pump is used for the coolant supply to cool an engine or components of a motor vehicle. Preferably, the auxiliary unit comprises a separating can that is arranged radially between the motor stator und the motor rotor. The separating can is substantially cylindrical and surrounds the motor rotor radially. The separating can separate the gas or fluid, for example coolant, from the dry parts of the electric motor comprising the motor stator.

In a preferred embodiment of the invention, the motor housing comprises a first housing element which defines a pump chamber, a second housing element which defines a motor chamber and a third housing element which defines an electronic chamber, wherein the separate ring-shaped magnetic back iron ring is overmolded by the second element of the plastic motor housing. In the assembled state, the first housing element is attached to a first front end of the second housing element and the third housing element is attached to a second front end. The fastenings between the housing elements are for example made by screws. By separating the motor housing, its manufacture can be simplified, since the overmoulding of the magnetic back iron ring is done exclusively by the second housing element.

The technical problem is also solved by a method for manufacturing an automotive electric auxiliary unit according to any one of claims 1 to 9. The procedure comprises the following steps:
- First overmolding the ring-shaped magnetic back iron ring by the stator housing, and then
- Attaching the stator teeth to the ring-shaped magnetic back iron ring.

For the advantages of the method see the previous approaches.

An embodiment of the invention is described with reference to the enclosed drawings, wherein
figure 1 shows schematically a longitudinal section of an automotive electric auxiliary unit with an electric motor,
figure 2 shows a section of an automotive electric auxiliary unit with an electric motor of figure 1, and
figure 3 shows a perspective view of a motor housing and a motor stator of the electric motor of figure 1.

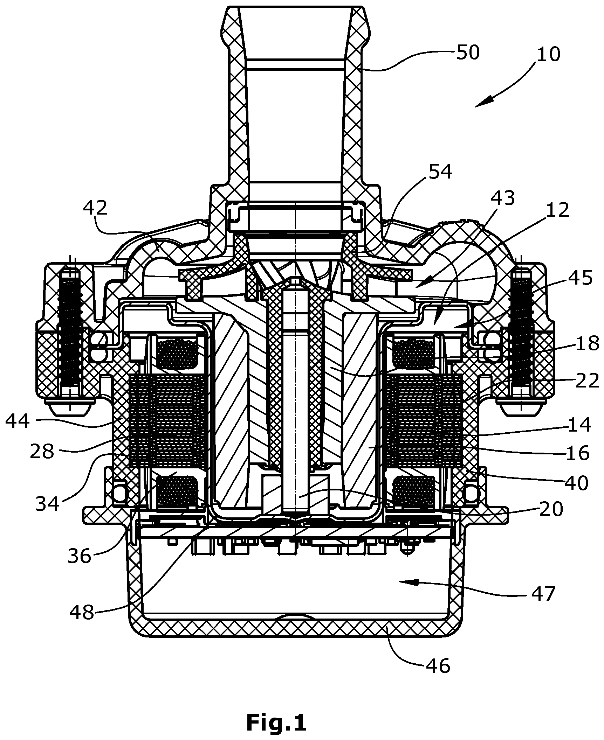

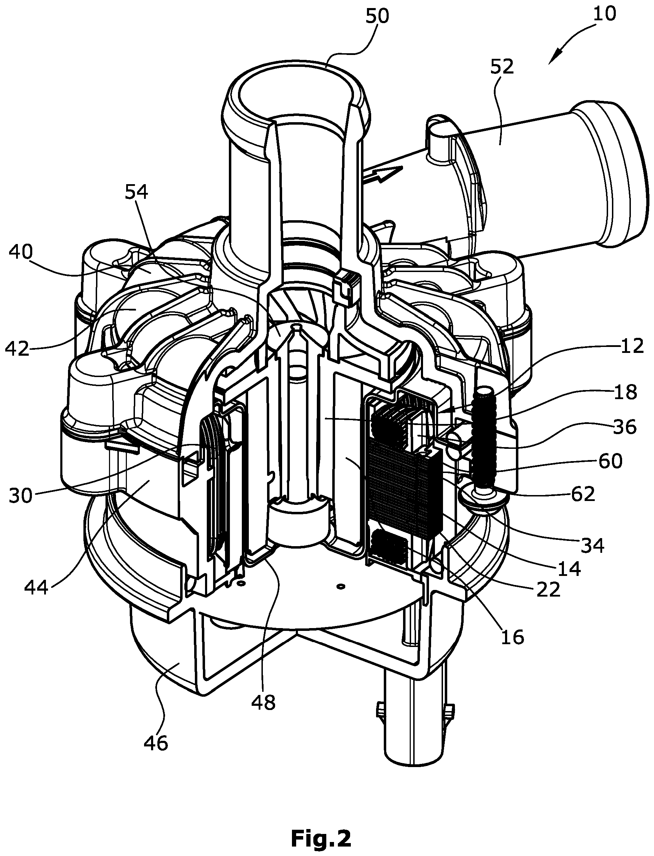

Figure 1 and figure 2 shows an automotive auxiliary unit 10 which is designed as a coolant pump. The automotive auxiliary unit 10 is provided with an electric motor 12 comprising a static motor stator 14, a rotatable motor rotor 16 with a rotor body 18 and a permanent magnet attached to the rotor body 18.

The motor rotor 16 rotates around a rotor axis 20, wherein the motor rotor 16 is supported by bearings that axially and radially position the motor rotor 16. A pump rotor 54 is attached to the motor rotor 16.

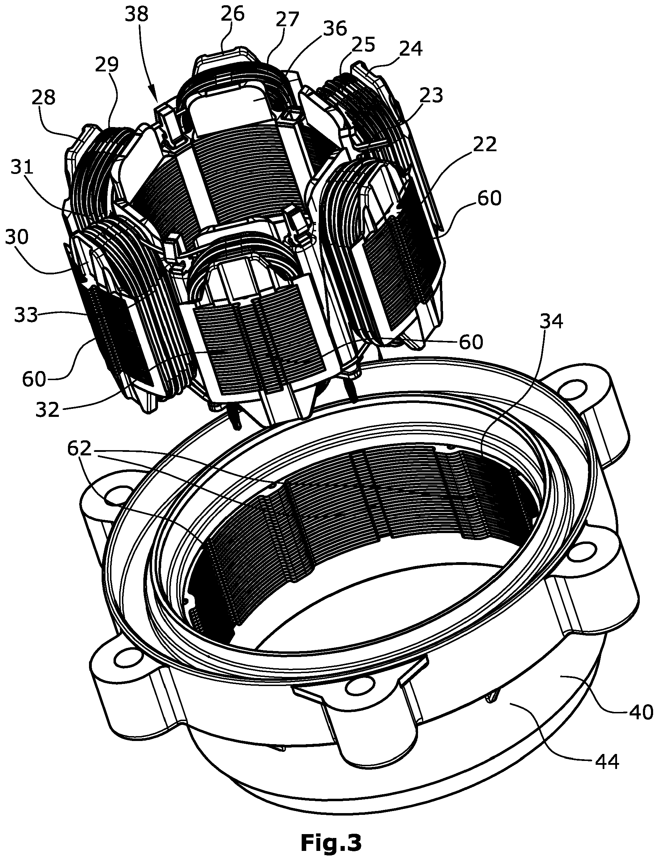

The motor stator 14 is formed by six stator teeth 22, 24, 26, 28, 30, 32 shown in figure 3 and a separate magnetic back iron ring 34. Each stator teeth 22, 24, 26, 28, 30, 32 comprise a sheet pack that consists of a plurality of identical stator sheets, wherein the sheets are stacked together by die-cut stacking. The stator teeth 22, 24, 26, 28, 30, 32 are undetachably fastened to the plastic member 36, so that the six stator teeth 22, 24, 26, 28, 30, 32 and the plastic member 36 art assembled as one mounting unit 38. The plastic member 36 is ring-shaped and connects the stator teeth 22, 24, 26, 28, 30, 32 on the radially inner side. The plastic member 36 separates the stator teeth 22, 24, 26, 28, 30, 32 magnetically from each other. Each stator teeth 22, 24, 26, 28, 30, 32 comprises a winding forming an electromagnetic coil 23, 25, 27, 29, 31, 33.

The magnetic back iron ring 34 radially surrounds the stator teeth 22, 24, 26, 28, 30, 32, wherein the magnetic back iron ring 34, the stator teeth 22, 24, 26, 28, 30, 32 comprising the plastic member 36 and the stator coils 23, 25, 27, 29, 31, 33 form the motor stator 14.

In Additional, the automotive auxiliary unit 10 is provided with the motor housing 40 which is also a pump housing. The substantially cylindrical motor housing 40 comprises a first housing element 42, a second housing element 44 and third housing element 46. The first housing element 42 and the third housing element 46 are pot-shaped. The second housing element 44 is ring-shaped. The first housing element 42 is attached to the second housing element 44 by several screws. The third housing element 46 is attached to the second housing element 44. The first housing element 42 defines a pump chamber 43. The second housing element 44 defines a motor chamber 45. The third housing element 46 defines an electronics chamber 47. A separating can 48 fluidically separates the pump chamber 43 from the motor chamber 45. The first housing Element 42 is provided with an axial pump inlet 50 and with a radial pump outlet 52.

According to the invention, the magnetic back iron ring 34 is overmolded by the motor housing 40, especially by the second housing element 44. The magnetic back iron ring 34 is attached to the mounting unit 38 by a dovetail connection, wherein the stator teeth 22, 24, 26, 28, 30, 32 each comprises a dovetail-shaped protrusion 60 and the magnetic back iron ring 34 comprises several grooves 62 corresponding to the dovetail-shaped protrusions 60.

In the coolant pump manufacturing process, the mounting unit 38 with the stator teeth 22, 24, 26, 28, 30, 32, the plastic member 36 and the coils 23, 25, 27, 29, 31, 33 is produced. At the same time, the motor housing 40 is produced by an injection molding process. During the injection molding process of the second housing element 44, the magnetic back iron ring 34 of the motor stator 14 is overmolded by the plastic of the second housing element 44. As a result, the magnetic back iron ring 34 is form-fitted to the second housing element 44 in radial, tangential and axial direction. In the next step, the mounting unit 38 is pushed axially into the magnetic back iron ring 34, wherein the dovetail-like protrusions 60 are pressed into the grooves 62. As a result, the mounting unit 38 is axially press-fitted to the magnetic back iron ring 34 and is radially and tangentially form-fitted to the magnetic back iron ring 34. In the following steps, the separating can 48 is installed, the motor rotor 16 comprising the pump rotor 54 is mounted and the housing elements 42, 44, 46 of the motor housing 40 are joined together.

This kind of manufacturing of the automotive auxiliary unit 10 reduces the production effort, wherein the additional step in which the motor stator 14 is attached to the motor housing 40 is not necessary anymore.

## Claims

1. An automotive electric auxiliary unit with an electric motor (12), comprising
- a rotatable motor rotor (16) rotating about a rotor axis (20),
- a multi-piece motor stator (14) comprising several stator coils (23, 25, 27, 29, 31, 33), several stator teeth (22, 24, 26, 28, 30, 32) and a separate ring-shaped magnetic back iron ring (34), wherein the separate ring-shaped magnetic back iron ring (34) radially surrounds the stator teeth (22, 24, 26, 28, 30, 32) and is attached to the stator teeth (22, 24, 26, 28, 30, 32), and
- a motor housing (40), **characterised in that**
- the motor housing (40) is a plastic motor housing (40), wherein
the separate ring-shaped magnetic back iron ring (34) is overmolded by the plastic motor housing (40), wherein the stator (14) is manufactured in such a way that first the coils (23, 25, 27, 29, 31, 33) are wound onto the stator teeth (22, 24, 26, 28, 30, 32) and the magnetic back iron ring (34) is overmoulded with the plastic material of the plastic motor housing (40) and then the stator teeth (22, 24, 26, 28, 30, 32) with the wound coils (23, 25, 27, 29, 31, 33) are inserted into magnetic back iron ring (34) and attached to the magnetic back iron ring (34).

2. An automotive electric auxiliary unit according to claim 1, wherein the plastic motor housing (40) is produced by injection moulding.

3. An automotive electric auxiliary unit according to claim 1 or 2, wherein the stator teeth (22, 24, 26, 28, 30, 32) are attached to the separate ring-shaped magnetic back iron ring (40) by a form-fit and/or a force-fit connecting.

4. An automotive electric auxiliary unit according to claim 3, wherein the form-fit connection is a dovetail connection, wherein several dovetail-like protrusions (60) are press-fitted into corresponding grooves (62).

5. An automotive electric auxiliary unit according to one of the preceding claims, wherein the stator teeth (22, 24, 26, 28, 30, 32) are attached to each other by a plastic member (36).

6. An automotive electric auxiliary unit according to claim 5, wherein the several stator teeth (22, 24, 26, 28, 30, 32) and the plastic member (36) are fastened to a mounting unit (38), wherein the stator teeth (22, 24, 26, 28, 30, 32) are form-fitted and undetachably fastened to the plastic member (36).

7. The automotive electric auxiliary unit according to one of the preceding claims, wherein the auxiliary unit (10) is provided with a centrifugal pump rotor (54) co-rotatably fixed to the motor rotor (16).

8. The automotive electric auxiliary unit of according to claim 7, wherein the auxiliary unit (10) is an electric coolant pump.

9. The automotive electric auxiliary unit according to claim 7 or 8, wherein the motor housing (40) comprises a first housing element (42) which defines a pump chamber (43), a second housing element (44) which defines a motor chamber (45) and a third housing element (46) which defines an electronic chamber (47), wherein the separate ring-shaped magnetic back iron ring (34) is overmolded by the second element (44) of the plastic motor housing (40).

10. Method for manufacturing an automotive electric auxiliary unit according to any one of claims 1 to 9 , with the steps:
- First overmolding the ring-shaped magnetic back iron ring (34) by the motor housing (40), and then
- Attaching the stator teeth (22, 24, 26, 28, 30, 32) to the ring-shaped magnetic back iron ring (34).

## Patentansprüche

1. Elektrische Hilfsvorrichtung für Kraftfahrzeuge mit einem Elektromotor (12), umfassend
- einen drehbaren Motorrotor (16), der sich um eine Rotorachse (20) dreht,
- einen mehrteiligen Motorstator (14), der mehrere Wicklungen (23, 25, 27, 29, 31, 33), mehrere Statorzähne (22, 24, 26, 28, 30, 32) und einen separaten, ringförmigen magnetischen Rückschlussring (34) umfasst, wobei der separate, ringförmige magnetische Rückschlussring (34) die Statorzähne (22, 24, 26, 28, 30, 32) radial umgibt und an den Statorzähnen (22, 24, 26, 28, 30, 32) befestigt ist, und
- ein Motorgehäuse (40),
**dadurch gekennzeichnet, dass**
das Motorgehäuse (40) ein Kunststoff-Motorgehäuse (40) ist, wobei der separate, ringförmige magnetische Rückschlussring (34) durch das Kunststoff-Motorgehäuse (40) umspritzt ist, wobei der Stator (14) derart hergestellt wird, dass zuerst die Wicklungen (23, 25, 27, 29, 31, 33) auf die Statorzähne (22, 24, 26, 28, 30, 32) gewickelt werden und der magnetische Rückschlussring (34) mit dem Kunststoffmaterial des Kunststoffmotorgehäuses (40) umspritzt wird (40) und anschließend die Statorzähne (22, 24, 26, 28, 30, 32) mit den gewickelten Wicklungen (23, 25, 27, 29, 31, 33) in den magnetischen Rückschlussring (34) eingesetzt und an dem magnetischen Rückschlussring (34) befestigt werden.

2. Elektrische Hilfsmaschine für Kraftfahrzeuge nach Anspruch 1, wobei das Kunststoff-Motorgehäuse (40) durch Spritzgießen hergestellt ist.

3. Hilfseinheit für Kraftfahrzeuge nach Anspruch 1 oder 2, wobei die Statorzähne (22, 24, 26, 28, 30, 32) durch eine formschlüssige und/oder kraftschlüssige Verbindung mit dem separaten ringförmigen magnetischen Rückschlussring (40) verbunden sind.

4. Elektrische Hilfseinheit für Kraftfahrzeuge nach Anspruch 3, wobei die formschlüssige Verbindung eine Schwalbenschwanzverbindung ist, bei der mehrere schwalbenschwanzartige Vorsprünge (60) in entsprechende Nuten (62) eingepresst sind.

5. Elektrische Hilfseinheit für Kraftfahrzeuge nach einem der vorhergehenden Ansprüche, wobei
die Statorzähne (22, 24, 26, 28, 30, 32) durch ein Kunststoffelement (36) miteinander befestigt sind.

6. Elektrische Hilfseinheit für Kraftfahrzeuge nach Anspruch 5, wobei die mehreren Statorzähne (22, 24, 26, 28, 30, 32) und das Kunststoffelement (36) an einer Montageeinheit (38) befestigt sind, wobei die Statorzähne (22, 24, 26, 28, 30, 32) formschlüssig und unlösbar an dem Kunststoffelement (36) befestigt sind.

7. Elektrische Hilfseinheit für Kraftfahrzeuge gemäß einem der vorhergehenden Ansprüche, wobei
die Hilfseinheit (10) mit einem Zentrifugalpumpenrotor (54) versehen ist, der drehfest mit dem Motorrotor (16) verbunden ist.

8. Elektrische Hilfseinheit für Kraftfahrzeuge gemäß Anspruch 7, wobei die Hilfseinheit (10) eine elektrische Kühlmittelpumpe ist.

9. Elektrische Hilfseinheit für Kraftfahrzeuge nach Anspruch 7 oder 8, wobei das Motorgehäuse (40) ein erstes Gehäuseelement (42), das eine Pumpenkammer (43) definiert, ein zweites Gehäuseelement (44), das eine Motorkammer (45) definiert, und ein drittes Gehäuseelement (46), das eine Elektronikkammer (47) definiert, umfasst, wobei der separate, ringförmige magnetische Rückschlussring (34) durch das zweite Gehäuseelement (44) des Kunststoff-Motorgehäuses (40) umspritzt wird.

10. Verfahren zur Herstellung einer elektrischen Hilfseinheit für Kraftfahrzeuge gemäß einem der Ansprüche 1 bis 9, mit den Schritten:
- zunächst Umspritzen des ringförmigen magnetischen Rückschlussrings (34) durch das Motorgehäuse (40), und dann
- Befestigen der Statorzähne (22, 24, 26, 28, 30, 32) an dem ringförmigen magnetischen Rückschlussring (34).

## Revendications

1. Une unité auxiliaire électrique d'automobile avec un moteur électrique (12), comprenant
- un rotor de moteur rotatif (16) tournant autour d'un axe de rotor (20),
- un stator de moteur en plusieurs parties (14) comprenant plusieurs bobines de stator (23, 25, 27, 29, 31, 33), plusieurs dents de stator (22, 24, 26, 28, 30, 32) et une bague magnétique de retour annulaire séparée (34), la bague magnétique de retour annulaire séparée (34) entourant radialement les dents de stator (22, 24, 26, 28, 30, 32) et étant fixée aux dents de stator (22, 24, 26, 28, 30, 32), et
- un boîtier de moteur (40),
**caractérisée en ce que**
- le boîtier de moteur (40) est un boîtier de moteur en plastique (40), la bague magnétique de retour annulaire séparée (34) étant surmoulée par le boîtier de moteur en plastique (40), le stator (14) étant fabriqué de telle sorte que d'abord les bobines (23, 25, 27, 29, 31, 33) sont enroulées sur les dents de stator (22, 24, 26, 28, 30, 32) et la bague magnétique de retour (34) est surmoulée avec la matière plastique 20 du boîtier de moteur en plastique (40) et ensuite les dents de stator (22, 24, 26, 28, 30, 32) avec les bobines enroulées (23, 25, 27, 29, 31, 33) sont insérées dans la bague magnétique de retour (34) et fixées à la bague magnétique de retour (34).

2. Une unité auxiliaire électrique d'automobile selon la revendication 1, dans laquelle le boîtier de moteur en plastique (40) est fabriqué par moulage par injection.

3. Une unité auxiliaire électrique d'automobile selon la revendication 1 ou 2, dans laquelle les dents de stator (22, 24, 26, 28, 30, 32) sont fixées à la bague magnétique de retour annulaire séparée (40) par une liaison par complémentarité de forme et/ou par force.

4. Une unité auxiliaire électrique d'automobile selon la revendication 3, dans laquelle la liaison par complémentarité de forme est une liaison en queue d'aronde, dans laquelle plusieurs saillies en queue d'aronde (60) sont ajustées par pression dans des rainures correspondantes (62).

5. Une unité auxiliaire électrique d'automobile selon l'une des revendications précédentes, dans laquelle les dents de stator (22, 24, 26, 28, 30, 32) sont fixées les unes aux autres par un élément en plastique (36).

6. Une unité auxiliaire électrique d'automobile selon la revendication 5, dans laquelle les plusieurs dents de stator (22, 24, 26, 28, 30, 32) et l'élément en plastique (36) sont fixés à une unité de montage (38), dans laquelle les dents de stator (22, 24, 26, 28, 30, 32) sont fixées par complémentarité de forme et de manière inamovible à l'élément en plastique (36).

7. L'unité auxiliaire électrique d'automobile selon l'une des revendications précédentes, dans laquelle l'unité auxiliaire (10) est pourvue d'un rotor de pompe centrifuge (54) fixé de manière solidaire en rotation au rotor de moteur (16).

8. L'unité auxiliaire électrique d'automobile selon la revendication 7, dans laquelle l'unité auxiliaire (10) est une pompe électrique à liquide de refroidissement

9. L'unité auxiliaire électrique d'automobile selon la revendication 7 ou 8, dans laquelle le boîtier de moteur (40) comprend un premier élément de boîtier (42) qui définit une chambre de pompe (43), un deuxième élément de boîtier (44) qui définit une chambre de moteur (45) et un troisième élément de boîtier (46) qui définit une chambre électronique (47), dans laquelle la bague magnétique de retour séparée (34) est surmoulé par le deuxième élément (44) du boîtier de moteur en plastique (40).

10. Methode de fabrication d'une unité auxiliaire électrique d'automobile selon l'une quelconque des revendications 1 à 9, comprenant les étapes :
- surmoulage d'abord de la bague magnétique de retour (34) par le boîtier de moteur (40), puis
- fixation des dents de stator (22, 24, 26, 28, 30, 32) sur la bague magnétique de retour (34).
